# FASCICULE DE BREVET EUROPEEN

(11) **EP 3 106 282 B1**
(45) Date de publication et mention de la délivrance du brevet: **06.06.2018**
(21) Numéro de dépôt: 16174219.2
(22) Date de dépôt: 13.06.2016
(51) Int. Cl.: B29C 45/14, F16C 35/063

(54) **PROCÉDÉ DE RECTIFICATION D'UNE SURFACE D'UN CORPS ROULANT POUR UN PALIER À ROULEMENT**
VERFAHREN ZUR REKTIFIZIERUNG EINER OBERFLÄCHE EINES ROLLKÖRPERS FÜR EIN WÄLZLAGER
METHOD FOR GRINDING A SURFACE OF A ROLLING BODY FOR A ROLLER BEARING

(30) Priorité: 17.06.2015 FR 1555558
(43) Date de publication de la demande: 21.12.2016
(73) Titulaire: NTN-SNR Roulements, 74010 Annecy (FR)
(72) Inventeur: BARTHOLOMEAU, Pascal, 74330 Epagny (FR); MONNET, Eric, 74600 Seynod (FR); SOUILLET-DESERT, Pierre, 74410 Saint-Jorioz (FR); TSEN, Cynthia, 73100 Mouxy (FR)
(74) Mandataire: Sayettat, Julien Christian

(56) Documents cités:
- EP-A1- 1 264 661
- WO-A1-2014/033253
- JP-A- 2001 205 563
- US-B1- 6 517 249

## Description

L'invention concerne un procédé de rectification d'une surface d'un corps roulant pour un palier à roulement. En particulier, l'invention s'applique pour la rectification d'une surface d'un rouleau conique, notamment de la grande face qui présente une géométrie sphérique, ledit rouleau étant par exemple destiné à guider la rotation d'un palier d'une boîte de vitesses de véhicule automobile.

Pour ce faire, on connaît l'utilisation d'une meule de type boisseau droit dont la surface de rectification présente un rayon correspondant à celui de la face du rouleau à rectifier, ladite face étant déplacée le long d'une trajectoire de ladite surface qui est agencée pour conférer à ladite face la sphéricité et l'état de surface, caractérisé notamment par la rugosité Ra (rugosité moyenne arithmétique), attendus.

En particulier, la trajectoire de rectification peut s'étendre sur au moins un bandeau présentant un liant, notamment sous la forme d'une résine, dans lequel un abrasif est dispersé, ledit abrasif étant choisi spécifiquement en fonction de la qualité de la rectification attendue.

Selon une réalisation particulière, la trajectoire de rectification s'étend successivement sur un bandeau d'ébauche et sur un bandeau de finition, l'abrasif dispersé dans la résine étant agencé, notamment de par une taille de grains d'abrasifs différentielle entre les bandeaux, pour réaliser successivement une opération de rectification ébauche avec enlèvement de matière important et une opération de rectification finition permettant l'amélioration de l'état de surface de ladite ébauche, notamment par diminution de sa rugosité.

Toutefois, afin de diminuer le couple de trainée induit par le frottement lors de la rotation des corps roulants dans le palier, une qualité de rectification optimale est recherchée, notamment relativement à une rugosité Ra la plus faible possible. Le document EP 1 264 661 A1 propose un procédé de rectification d'une surface d'un corps cylindrique, ledit procédé prévoyant de faire défiler ladite surface le long d'une trajectoire s'étendant successivement sur un bandeau d'une meule de rectification, lesdits bandeaux étant formés d'un abrasif. L'invention vise à perfectionner l'art antérieur en proposant notamment un procédé de rectification d'une surface d'un corps roulant utilisant une meule dont les bandeaux d'ébauche et de finition sont optimisés, notamment pour maitriser la géométrie de ladite surface et diminuer sa rugosité.

A cet effet, l'invention propose un procédé de rectification d'une surface d'un corps roulant pour un palier à roulement selon la revendication 1, ledit procédé prévoyant de faire défiler ladite surface le long d'une trajectoire s'étendant successivement sur au moins un bandeau d'ébauche et sur au moins un bandeau de finition d'une meule de rectification, chacun desdits bandeaux étant formé d'un liant dans lequel un abrasif est dispersé, ledit procédé prévoyant que le liant du bandeau de finition soit à base de résine époxy, le liant du bandeau d'ébauche étant à base d'une résine organique de nature chimique différente et comprenant un abrasif dont la taille des grains est supérieure à celle de l'abrasif dudit bandeau de finition.

D'autres objets et avantages de l'invention apparaîtront dans la description qui suit, faite en référence aux figures jointes, dans lesquelles :
- la figure 1 est une représentation d'un rouleau conique sur la grande face duquel un procédé de rectification selon l'invention est mis en oeuvre ;
- les figures 2 sont des représentations d'une meule pour la mise en oeuvre d'un procédé de rectification d'une surface d'un corps roulant selon l'invention, respectivement en perspective (figure 2a) et en coupe longitudinale (figure 2b) ;
- la figure 3 est une vue de face de la surface de rectification de la meule des figures 2 sur laquelle la trajectoire de rectification est représentée.

En relation avec les figures, on décrit ci-dessous un corps roulant 1 pour un palier à roulement, notamment sous la forme d'un rouleau conique présentant une périphérie tronconique 2 bordée de part et d'autre par une petite base 3 et par une grande face sphérique 4.

Les corps roulants 1 sont destinés à être disposés dans un espace de roulement formé entre un organe intérieur et un organe extérieur d'un palier afin de pouvoir guider leur rotation relative. Les paliers à rouleaux coniques, de par leur aptitude à supporter des efforts radiaux et axiaux importants, trouvent particulièrement leur application pour le guidage en rotation d'organes mécaniques de transmission de couple, notamment les boîtes de vitesses de véhicule automobile.

Les corps roulants 1 sont classiquement réalisés en acier à roulement, par exemple de type 100Cr6, pour supporter les pressions de contact de roulement. Pour garantir un guidage optimal de la rotation du palier, la périphérie 2 et au moins la grande face 4 des corps roulants 1 doivent être rectifiées. En particulier, la rectification permet de définir la géométrie extérieure du corps roulant 1 et d'améliorer son état de surface, caractérisé notamment par sa rugosité Ra, afin notamment de limiter le couple de trainée induit par le frottement lors de la rotation desdits corps roulants dans le palier.

Pour ce faire, après une première opération de mise en forme, par déformation ou usinage, et traitement thermique, le corps roulant 1 est soumis à un procédé de rectification d'au moins une surface parmi notamment sa périphérie 2 et sa grande face 4. En relation avec les figures, on décrit ci-dessous la mise en oeuvre d'un procédé pour la rectification de la grande face sphérique 4 d'un rouleau conique 1.

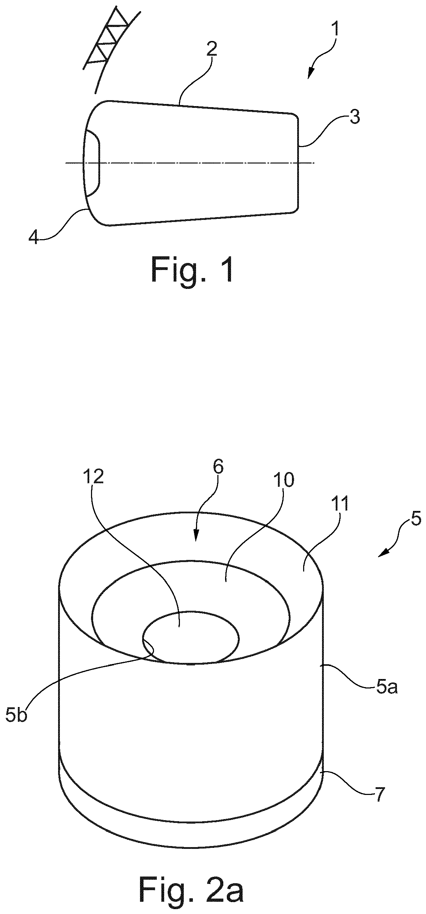

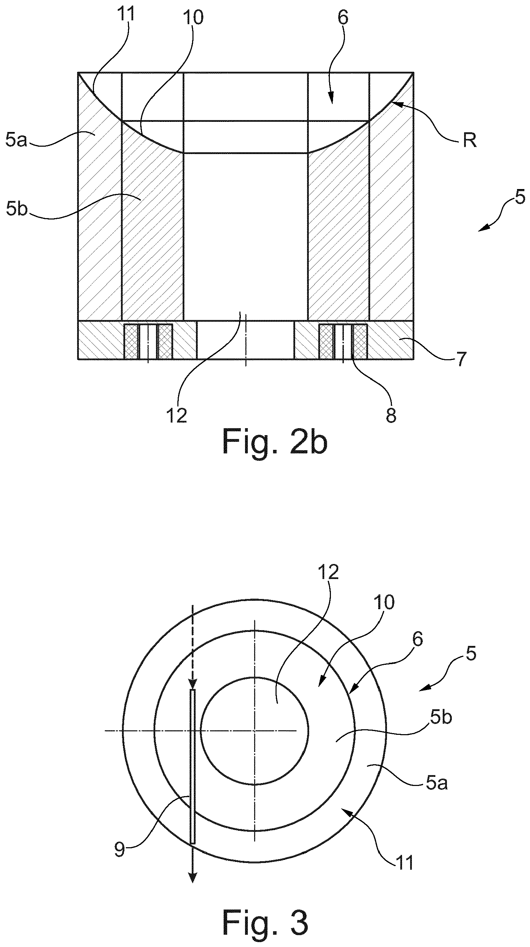

En relation avec les figures 2, le procédé utilise une meule 5 de type boisseau droit dont la surface de rectification 6 présente un rayon R qui est agencé pour rectifier la grande face sphérique 4 des rouleaux coniques 1. En variante, une meule plate peut être utilisée, ladite meule étant taillée sur son diamètre extérieur au rayon R que l'on souhaite rectifier sur la face du rouleau 1.

En particulier, la meule 5 peut comprendre une semelle 7 intégrant des fixations 8 sur une machine qui est agencée notamment pour disposer ladite meule en rotation devant un porte-outils entraînant notamment en rotation des rouleaux coniques 1, les déplacement relatifs de la meule 5 et des rouleaux coniques 1 étant agencés pour réaliser la rectification attendue. En variante, le bandeau de finition 5a peut intégrer les fixations de la meule 5.

En particulier, la rectification peut être réalisée en :
- disposant plusieurs corps roulants 1 dans respectivement une alvéole d'une cage de rétention montée sur le porte-outils ;
- mettant en rotation les corps roulants 1 sur eux-mêmes ;
- faisant défiler chacune des faces 4 le long d'une trajectoire 9 de la surface de rectification 6 de la meule 5, mise en rotation sur elle-même, afin de reproduire la forme sphérique sur lesdites faces.

La meule 5 présente un bandeau d'ébauche 10 et un bandeau de finition 11 sur lesquels la trajectoire de rectification 9 s'étend successivement. Ainsi, on peut réaliser une ébauche de rectification par enlèvement de matière puis une finition par diminution de la rugosité pour améliorer l'état de surface de ladite ébauche. En particulier, le bandeau de finition 11 peut entourer le bandeau d'ébauche 10 afin de former une surface de rectification 9 qui s'étend vers l'extérieur de la surface de rectification 6.

En variante non représentée, la meule 5 peut présenter un bandeau supplémentaire sur laquelle la trajectoire de rectification 9 s'étend, notamment un bandeau dépourvu d'abrasif, par exemple à base d'une résine époxy, ledit bandeau pouvant être prévu sur la surface de la meule 5 afin que la trajectoire 9 finisse sur ledit bandeau pour éviter que les rouleaux 1 ne puissent être blessés lors de leur sortie de la surface de rectification 6. En outre, selon le sens de la trajectoire de rectification 9, on peut envisager une meule sur laquelle le bandeau d'ébauche 10 entoure le bandeau de finition 11.

En relation avec les figures 2, la meule 5 comprend un corps annulaire extérieur 5a entourant un corps annulaire intérieur 5b, lesdits corps s'étendant concentriquement depuis la semelle 7 vers une surface libre commune en étant solidarisés ensemble. Par ailleurs, le corps intérieur 5b ainsi que la semelle 7 forment un alésage 12 qui traverse axialement la meule 5, ladite meule pouvant présenter un diamètre compris entre 135 et 350 mm pour une hauteur comprise entre 150 et 175 mm.

La surface libre est taillée, notamment pour lui conférer le rayon R souhaité pour la grande face 4 à rectifier, afin de former la surface de rectification 6, le bandeau d'ébauche 10 - respectivement de finition 11 - étant formé sur la surface libre du corps intérieur 5b - respectivement extérieur 5a.

Chacun des bandeaux 10, 11 est formé d'un liant dans lequel un abrasif est dispersé, le liant du bandeau de finition 11 étant à base de résine époxy, le liant du bandeau d'ébauche 10 étant à base d'une résine organique de nature chimique différente et comprenant un abrasif dont la taille des grains est supérieure à celle de l'abrasif dudit bandeau de finition.

Ainsi, les bandeaux d'ébauche 10 et de finition 11 sont optimisés, notamment pour pouvoir maîtriser la sphéricité de la face 4 avec une bonne tolérance tout en améliorant son état de surface. Selon une réalisation, la résine organique du bandeau d'ébauche 10 peut être obtenue par polymérisation, par exemple d'un mélange de formol et de phénol, ladite polymérisation étant réalisée à chaud (typiquement de l'ordre de 180°C). Ainsi, on obtient une résine qui, en relation avec une taille des grains d'abrasif importante, est favorable à l'enlèvement de matière en limitant les échauffements.

Par ailleurs, la résine époxy du bandeau de finition 11 peut être obtenue par réticulation à température ambiante d'un polymère époxy. En particulier, la résine époxy peut ne pas nécessiter de cuisson, le moule de mise en forme de la meule 5 pouvant être préchauffé, pour permettre la réaction chimique de réticulation. Ainsi, on obtient une résine qui, en relation avec une taille des grains d'abrasif faible, est favorable à la diminution de la rugosité.

De façon avantageuse, la rectification peut être mise en oeuvre avec une meule 5 dont la largeur, c'est-à-dire la dimension suivant le rayon, de chaque bandeau 10, 11 est comprise entre 25% et 75% de la largeur de la surface de rectification 6. Dans le mode de réalisation représenté, le bandeau d'ébauche 10 présente une largeur qui est supérieure à celle du bandeau de finition 11.

Par ailleurs, en relation avec la figure 3, la trajectoire de rectification 9 s'étend parallèlement au diamètre de la meule 5 en étant décalée dudit diamètre d'une distance radiale. En particulier, cette réalisation permet de maintenir la surface à rectifier sur une trajectoire d'ébauche qui est plus longue que la trajectoire de finition, par exemple en étant entre deux et quatre fois plus longue.

Selon une réalisation, l'abrasif dispersé dans chacun des liants est à base d'oxyde d'aluminium (Al₂O₃) notamment sous forme d'alumine ou de corindon (α-Al₂O₃) pouvant avoir subi un traitement chimique permettant de lui conférer des propriétés particulières, par exemple de friabilité, de carbure de silicium (SiC) et/ou de nitrure de bore cubique (CBN), la taille des grains de l'abrasif selon la norme FEPA (nombre de grains d'abrasif par pouce) pouvant être choisie dans la plage 120 - 240 pour le bandeau d'ébauche 10 et dans la plage 240 - 600 pour le bandeau de finition 11. Selon une réalisation, un mélange de taille de grains peut être dispersé dans le liant du bandeau d'ébauche 10 et/ou de finition 11.

## Revendications

1. Procédé de rectification d'une surface (4) d'un corps roulant (1) pour un palier à roulement, ledit procédé prévoyant de faire défiler ladite surface le long d'une trajectoire (9) s'étendant successivement sur au moins un bandeau d'ébauche (10) et sur au moins un bandeau de finition (11) d'une meule de rectification (5), chacun desdits bandeaux étant formé d'un liant dans lequel un abrasif est dispersé, ledit procédé étant **caractérisé en ce qu'**il prévoit que le liant du bandeau de finition (11) soit à base de résine époxy, le liant du bandeau d'ébauche (10) étant à base d'une résine organique de nature chimique différente et comprenant un abrasif dont la taille des grains est supérieure à celle de l'abrasif dudit bandeau de finition.

2. Procédé de rectification selon la revendication 1, **caractérisé en ce qu'**il utilise une meule (5) de type boisseau droit dont la surface de rectification (6) présente un rayon (R) qui est agencé pour rectifier une surface sphérique (4) du corps roulant (1).

3. Procédé de rectification selon l'une des revendications 1 ou 2, **caractérisé en ce qu'**il utilise une meule (5) dont le bandeau de finition (11) entoure le bandeau d'ébauche (10).

4. Procédé de rectification selon l'une des revendications 1 ou 2, **caractérisé en ce qu'**il utilise une meule (5) dont le bandeau d'ébauche (10) entoure le bandeau de finition (11).

5. Procédé de rectification selon l'une quelconque des revendications 1 à 4, **caractérisé en ce qu'**il utilise une meule (5) présentant un bandeau dépourvu d'abrasif.

6. Procédé de rectification selon l'une quelconque des revendications 1 à 5, **caractérisé en ce qu'**il utilise une meule (5) dont la largeur de chaque bandeau (10, 11) est comprise entre 25% et 75% de la largeur de la surface de rectification (6).

7. Procédé de rectification selon l'une quelconque des revendications 1 à 6, **caractérisé en ce que** l'abrasif dispersé dans chacun des liants est à base d'oxyde d'aluminium, de carbure de silicium ou de nitrure de bore cubique.

8. Procédé de rectification selon l'une quelconque des revendications 1 à 7, **caractérisé en ce que** la taille des grains de l'abrasif selon la norme FEPA est choisie dans la plage 120 - 240 pour le bandeau d'ébauche (10) et dans la plage 240 - 600 pour le bandeau de finition (11).

9. Procédé de rectification selon l'une quelconque des revendications 1 à 8, **caractérisé en ce qu'**il utilise une meule (5) dont la résine organique du bandeau d'ébauche (10) est obtenue par polymérisation réalisée à chaud.

10. Procédé de rectification selon l'une quelconque des revendications 1 à 9, **caractérisé en ce qu'**il utilise une meule (5) dont la résine époxy du bandeau de finition (11) est obtenue par réticulation à température ambiante.

11. Procédé de rectification selon l'une quelconque des revendications 1 à 10, **caractérisé en ce qu'**il est mis en oeuvre pour la rectification d'une grande face sphérique (4) d'un rouleau conique (1).

12. Procédé de rectification selon l'une quelconque des revendications 1 à 11, caractérisé en ce la meule (5) et/ou le corps roulant (1) sont mis en rotation sur eux-mêmes lors de la rectification.

## Patentansprüche

1. Verfahren zum Schleifen einer Oberfläche (4) eines Rollkörpers (1) für ein Wälzlager, wobei das Verfahren vorsieht, dass die Oberfläche eine Bahn (9) absolviert, die sich aufeinanderfolgend über mindestens einen Grobschleifstreifen (10) und über mindestens einen Feinschleifstreifen (11) einer Schleifscheibe (5) erstreckt, wobei jeder dieser Streifen von einem Bindemittel gebildet ist, in dem ein Schleifmittel verteilt ist, wobei das Verfahren **dadurch gekennzeichnet ist, dass** es vorsieht, dass das Bindemittel des Feinschleifstreifens (11) auf der Basis von Epoxidharz ist, wobei das Bindemittel auf der Basis des Grobschleifstreifens (10) auf der Basis eines organischen Harzes unterschiedlicher chemischer Art ist und ein Schleifmittel umfasst, dessen Korngröße größer als die des Schleifmittels des Feinschleifstreifens ist.

2. Schleifverfahren nach Anspruch 1, **dadurch gekennzeichnet, dass** es eine Schleifscheibe (5) vom Typ gerader Topf verwendet, deren Schleifoberfläche (6) einen Radius (R) aufweist, der ausgebildet ist, um eine kugelige Oberfläche (4) des Rollkörpers (1) zu schleifen.

3. Schleifverfahren nach einem der Ansprüche 1 oder 2, **dadurch gekennzeichnet, dass** es eine Schleifscheibe (5) verwendet, deren Feinschleifstreifen (11) den Grobschleifstreifen (10) umgibt.

4. Schleifverfahren nach einem der Ansprüche 1 oder 2, **dadurch gekennzeichnet, dass** es eine Schleifscheibe (5) verwendet, deren Grobschleifstreifen (10) den Feinschleifstreifen (11) umgibt.

5. Schleifverfahren nach einem der Ansprüche 1 bis 4, **dadurch gekennzeichnet, dass** es eine Schleifscheibe (5) verwendet, die einen Streifen ohne Schleifmittel aufweist.

6. Schleifverfahren nach einem der Ansprüche 1 bis 5, **dadurch gekennzeichnet, dass** es eine Schleifscheibe (5) verwendet, bei der die Breite jedes Streifens (10, 11) zwischen 25 % und 75 % inklusive der Breite der Schleifoberfläche (6) beträgt.

7. Schleifverfahren nach einem der Ansprüche 1 bis 6, **dadurch gekennzeichnet, dass** das in jedem der Bindemittel verteilte Schleifmittel auf der Basis von Aluminiumoxid, von Siliciumcarbid oder von kubischem Bornitrid ist.

8. Schleifverfahren nach einem der Ansprüche 1 bis 7, **dadurch gekennzeichnet, dass** die Größe der Körner des Schleifmittels gemäß der Norm FEPA im Bereich 120 - 240 für den Grobschleifstreifen (10) und im Bereich 240 - 600 für den Feinschleifstreifen (11) ausgewählt ist.

9. Schleifverfahren nach einem der Ansprüche 1 bis 8, **dadurch gekennzeichnet, dass** es eine Schleifscheibe (5) verwendet, bei der das Epoxidharz des Feinschleifstreifens (10) durch Warmpolymerisation erhalten ist.

10. Schleifverfahren nach einem der Ansprüche 1 bis 9, **dadurch gekennzeichnet, dass** es eine Schleifscheibe (5) verwendet, bei der das Epoxidharz des Feinschleifstreifens (11) durch Vernetzung bei Raumtemperatur erhalten ist.

11. Schleifverfahren nach einem der Ansprüche 1 bis 10, **dadurch gekennzeichnet, dass** es für das Schleifen einer großen kugeligen Fläche (4) eines konischem Wälzkörpers (1) durchgeführt wird.

12. Schleifverfahren nach einem der Ansprüche 1 bis 11, **dadurch gekennzeichnet, dass** die Schleifscheibe (5) und/oder der Rollkörper (1) beim Schleifen um sich selbst in Rotation versetzt wird.

## Claims

1. Method for grinding a surface (4) of a rolling body (1) for a roller bearing, said method comprising the passing of said surface along a trajectory (9) successively extending over at least one rough dressing (10) and over at least one finish dressing (11) of a grinding wheel (5), each of said dressings being formed from a binder in which an abrasive is dispersed, said method being **characterised in that** it provides for the binder of the finish dressing (11) to be an epoxy resin-based binder, whereby the binder of the rough dressing (10) is an organic resin-based binder, the chemical nature of which is different and comprising an abrasive, the particle size of which is greater than that of the abrasive of said finish dressing.

2. Grinding method according to claim 1, **characterised in that** it uses a grinding wheel (5) of the straight cup grinding wheel type, the grinding surface (6) of which has a radius (R) that is arranged such that it grinds a spherical surface (4) of the rolling body (1).

3. Grinding method according to either claim 1 or claim 2, **characterised in that** it uses a grinding wheel (5), the finish dressing (11) of which surrounds the rough dressing (10).

4. Grinding method according to either claim 1 or claim 2, **characterised in that** it uses a grinding wheel (5), the rough dressing (10) of which surrounds the finish dressing (11).

5. Grinding method according to any of claims 1 to 4, **characterised in that** it uses a grinding wheel (5) having a dressing that does not contain any abrasive.

6. Grinding method according to any of claims 1 to 5, **characterised in that** it uses a grinding wheel (5), the width of each dressing (10, 11) of which lies in the range 25% to 75% of the width of the grinding surface (6).

7. Grinding method according to any of claims 1 to 6, **characterised in that** the abrasive dispersed in each of the binders has an aluminium oxide, silicon carbide or cubic boron nitride base.

8. Grinding method according to any of claims 1 to 7, **characterised in that** the particle size of the abrasive according to the FEPA standard is selected from the range 120-240 for the rough dressing (10) and from the range 240-600 for the finish dressing (11).

9. Grinding method according to any of claims 1 to 8, **characterised in that** it uses a grinding wheel (5), the organic resin of the rough dressing (10) of which is obtained by heat curing.

10. Grinding method according to any of claims 1 to 9, **characterised in that** it uses a grinding wheel (5), the epoxy resin of the finish dressing (11) of which is obtained by crosslinking at ambient temperature.

11. Grinding method according to any of claims 1 to 10, **characterised in that** it is implemented in order to grind a large spherical face (4) of a tapered roller (1).

12. Grinding method according to any of claims 1 to 11, **characterised in that** the grinding wheel (5) and/or the rolling body (1) are driven in rotation about themselves during the grinding process.
